# FASCICULE DE BREVET EUROPEEN

(11) **EP 3 044 269 B1**
(45) Date de publication et mention de la délivrance du brevet: **27.10.2021**
(21) Numéro de dépôt: 14761842.5
(22) Date de dépôt: 09.09.2014
(51) Int. Cl.: C09D 5/34, C08K 5/00, C08K 5/01, C08K 5/101, C09J 11/06, C08L 71/00, C08L 75/04

(54) **PLASTIFIANT POUR MASTICS ET ADHESIFS**
WEICHMACHER FÜR DICHTUNGSMASSEN UND KLEBSTOFFE
PLASTICISER FOR SEALANTS AND ADHESIVES

(30) Priorité: 11.09.2013 FR 1358730
(43) Date de publication de la demande: 20.07.2016
(73) Titulaire: Total Marketing Services, 92800 Puteaux (FR)
(72) Inventeur: BARDIN, Franck, F-78240 Chambourcy (FR); BAUER, Thorsten, 49084 Osnabrück (DE)
(74) Mandataire: Hirsch & Associés
(86) Numéro de dépôt international: PCT/EP2014/069160
(87) Numéro de publication internationale: WO 2015/036389

(56) Documents cités:
- WO-A1-01/83640
- WO-A1-2007/006489
- WO-A1-2010/103244
- FR-A1- 2 910 477
- US-A1- 2001 044 486
- None

## Description

### DOMAINE DE L'INVENTION

L'invention concerne une composition de fluides hydrocarbonés utilisable en tant que plastifiant dans la formulation de mastics et adhésifs.

La présente invention concerne un plastifiant sans phtalates, à bas taux de composés organiques volatiles (ou COV) et comprenant en outre une partie de composés d'origine renouvelable.

La présente invention concerne aussi l'utilisation de ladite composition pour la formulation de mastics et d'adhésifs.

### CONTEXTE TECHNIQUE DE L'INVENTION

De nombreux produits sont utilisés dans les matériaux de construction, par exemple pour les revêtements de sol, les mastics ou encore les joints de sanitaires. L'ajout de plastifiants est courant dans certaines familles de mastics tels que les mastics hybrides (à base de polymères siliconés modifiés), les mastics acryliques, les mastics Polyuréthanes, les Plastisols (pâte PVC) et certains adhésifs. Un plastifiant est une molécule ou un oligomère, à l'état solide ou à l'état liquide plus ou moins visqueux, ajouté aux formulations de différents types de matériaux pour les rendre plus flexibles, plus résistants, plus résilients ou plus faciles à manipuler.

Un plastifiant idéal est compatible avec la matrice polymère pour éviter les phénomènes de migration, peu volatil, difficilement extractible par les liquides qui seront en contact avec le matériau plastifié, performant vis-à-vis de certaines propriétés comme la souplesse, résistant aux chocs, au froid, à la chaleur et ayant une bonne résistivité électrique. Il ne s'oxydera pas et sera non toxique, inodore, incolore et peu coûteux.

Les phtalates sont des produits très couramment utilisés comme plastifiant. Mais la pression réglementaire de plus en plus forte restreint leurs emplois dans de nombreux pays du fait de leur dangerosité pour l'homme. Des alternatives à leur utilisation sont donc aujourd'hui nécessaires et très recherchées.

D'autre part, les contraintes réglementaires récentes apportées par les limitations en Composés Organiques Volatiles ou COV (Volatil Organic Compounds en anglais ou VOC) dans les matériaux de construction sont également à prendre en compte. En effet, ces composés ont tendance soit tout de suite, soit avec le temps à s'évaporer et/ou se dégrader et à être une source d'émissions souvent toxiques pour l'environnement et plus particulièrement pour les santés humaine et animale. Ces émissions environnant la vie de tous les jours constituent une source importante de pollution intérieure des habitations, des bureaux et des administrations et de tout espace enfermé dont l'aération est limitée. Ces émissions peuvent être majeures au moment de la pose des matériaux mais il peut également y avoir un effet à plus long terme par volatilité rémanente en fonction du temps ou même liée à la dégradation progressive du revêtement ou de la composition adhésive ou du mastic.

Les fluides hydrocarbonés de type gazole, kérosène ou white spirit peuvent également être utilisés comme plastifiant secondaire dans différentes formulations incluant des polymères ou résines. C'est le cas pour les mastics ou les pâtes PVC.

Mais leur utilisation est aujourd'hui limitée par leur moindre compatibilité dans le polymère par rapport aux phtalates. Des phénomènes de migration en surface, de ressuage, des défauts d'aspect de surface constatés empêchent la production de formules sans phtalates contenant uniquement des fluides hydrocarbonés.

De part les contraintes réglementaires de plus en plus importantes, une solution technique est requise pour permettre le remplacement des phtalates dans des formulations stables et économiquement avantageuses de matériaux de construction à bas taux de COV. <insérer page 2a>

Un des principaux objectifs de la demanderesse est donc de proposer une composition utilisable comme plastifiant exempte de phtalates, pour la formulation de matériaux de constructions et de matériaux destinés au secteur automobile tels que les mastics, ou certains types d'adhésifs.

Un autre des objectifs de la demanderesse est d'obtenir une composition utilisable comme plastifiant à caractères non COV, pour la formulation de matériaux de construction, de matériaux à base de résines ou de matériaux utilisés dans le secteur automobile tels que les mastics, ou certains types d'adhésifs.

Un autre objectif de la demanderesse est de proposer une composition utilisable comme plastifiant compatible avec une utilisation pour la formulation de mastics et d'adhésifs.

Un autre objectif de la demanderesse est de proposer une composition utilisable comme plastifiant permettant la formulation de mastics et adhésifs ayant un durcissement satisfaisant, notamment selon la norme DIN ISO 7619 (pour les mastics).

Le document US 2001/044486 décrit une composition de plastisols comprenant une base plastisol telle que du polychlorure de vinyle, un premier plastifiant et un second plastifiant, le second plastifiant comprenant un monoester alkyl en C1-2 d'un acide gras contenant au moins 12 atomes de carbone.

Le document WO 2007/006489 décrit l'utilisation de biodiesel comme plastifiant de compositions de polymères. Ces polymères peuvent être des polyéthers modifiés par du silane ou des polyuréthanes modifiés par du silane. Le biodiesel est l'appellation d'un mélange d'esters méthyliques d'acides gras produit à partir d'huiles végétales.

Un autre objectif de la demanderesse est de proposer une composition utilisable comme plastifiant permettant la formulation de mastics et adhésifs ne présentant pas de ressuage.

Un autre objectif de la demanderesse est de proposer une composition utilisable comme plastifiant permettant la formulation de mastics et adhésifs présentant un séchage satisfaisant, c'est-à-dire un séchage en moins de 24 heures pour un film d'une épaisseur de 2 mm.

Un autre objectif de la demanderesse est de proposer une composition utilisable comme plastifiant permettant la formulation de mastics et adhésifs présentant une viscosité adéquate, c'est-à-dire une viscosité comprise entre 2000 et 8000 Pa.s.

Un autre objectif de la demanderesse est de proposer une composition utilisable comme plastifiant permettant la formulation de mastics et adhésifs présentant un temps de formation de peau satisfaisant, c'est-à-dire un temps de formation de peau à température ambiante compris entre 5 et 45 minutes.

Un autre objectif de la demanderesse est de proposer une composition utilisable comme plastifiant permettant la formulation de mastics et adhésifs présentant une bonne résistance au cisaillement selon la norme DIN EN 14293 (pour les mastics).

Un autre objectif de la demanderesse est de proposer une composition utilisable comme plastifiant permettant la formulation de mastics et adhésifs présentant un module d'élasticité selon la norme DIN 53504 ou selon la norme DIN 52455-1 adéquate (pour les mastics).

Un autre objectif de la demanderesse est de proposer une composition utilisable comme plastifiant permettant la formulation de mastics et adhésifs présentant une bonne résistance à la traction selon la norme DIN 53504 (pour les mastics).

Un autre objectif de la demanderesse est de proposer une composition utilisable comme plastifiant permettant la formulation de mastics et adhésifs présentant un allongement à la rupture satisfaisant selon la norme DIN 53504 (pour les mastics).

Un autre objectif de la demanderesse est de proposer une composition utilisable comme plastifiant permettant la formulation de mastics et adhésifs présentant une reprise élastique satisfaisante selon la norme DIN EN ISO 7389 (pour les mastics).

### RESUME DE L'INVENTION

L'invention concerne une composition comprenant :
a) au moins un polymère choisi dans le groupe consistant en un polyéther comportant deux fonctions terminales de type silane, un polyuréthane comportant deux fonctions terminales de type silane, un polyamide, ou un melange de ceux-ci ;
b) un plastifiant pour mastics et adhésifs, ledit plastifiant comprenant :
   i) au moins une coupe hydrocarbonée ou une coupe issue de la conversion de la biomasse, ladite coupe pouvant être produite à partir de matériaux biologiques bruts sélectionnés dans le groupe consistant en des huiles végétales, des graisses animales, des huiles de poisson et des mélanges de celles-ci, les matériaux biologiques bruts subissant une étape d'hydrodésoxygénation (HDO) pour décomposer la structure des esters ou triglycérides biologiques constitutifs et pour éliminer les composés contenant de l'oxygène, du phosphore et du soufre tout en produisant en même temps l'hydrogénation des liaisons oléfiniques, suivi par une isomérisation du produit ainsi obtenu conduisant à la ramification de la chaîne hydrocarbure ; et
   ii) au moins un monoester d'acides gras, les acides gras du monoester d'acides gras comprenant de 6 à 24 atomes de carbone ;
   iii) moins de 1% en poids de phtalates
c) au moins un composé choisi dans le groupe consistant en un épaississant, une charge, un agent de réticulation, un catalyseur de réticulation et une résine tackifiante, ou un mélange de ceux-ci.

De préférence, le plastifiant pour mastics et adhésifs comprend :
a) au moins une coupe hydrocarbonée et
b) au moins un monoester d'acides gras.

De préférence, la coupe hydrocarbonée est une coupe hydrocarbonée hydrotraitée, hydrocraquée ou craquée catalytiquement.

De préférence, la coupe hydrocarbonée est une coupe hydrocarbonée désaromatisée et éventuellement désulfurée

De préférence, la coupe hydrocarbonée présente une température d'ébullition comprise entre 230 et 400 °C.

De préférence, la coupe hydrocarbonée présente une viscosité cinématique à 40°C comprise entre 2 et 22 mm²/s selon la norme ASTM D445.

De préférence, la coupe hydrocarbonée présente un point d'écoulement allant de -50 à + 10 °C selon la norme ASTM D97.

De préférence, la coupe hydrocarbonée présente une teneur en composés aromatiques mesurée par UV inférieure à 300 ppm, de préférence inférieure à 200 ppm et encore plus préférentiellement inférieure à 100 ppm.

De préférence, le monoester d'acide gras est un ester méthylique d'acides gras en C14-18.

De préférence, le rapport massique entre le monoester d'acide gras et la coupe hydrocarbonée ou la coupe issue de la conversion de la biomasse est compris entre 5:95 et 75:25, de préférence entre 10:90 et 60:40, plus préférentiellement entre 20:80 et 45:55, encore plus préférentiellement entre 30:70 et 40:60.

Selon un mode de réalisation, ladite composition comprend de 10 à 50 % en poids dudit polymère, de préférence de 20 à 30 %.

Selon un mode de réalisation, ladite composition comprend de 10 à 30 % en poids de plastifiant, de préférence de 10 à 25 %.

Selon un mode de réalisation, la composition est une composition de mastic comprenant:
- au moins un polymère choisi dans le groupe consistant en un polyéther comportant deux fonctions terminales de type silane, un polyuréthane comportant deux fonctions terminales de type silane, ou un mélange de ceux-ci ;
- le plastifiant tel que décrit ci-dessus ;
- et au moins un agent réticulant.

Selon un mode de réalisation, la composition est une composition d'adhésif comprenant:
- au moins un polyamide,
- un copolymère éthylène-acétate de vinyle,
- le plastifiant tel que décrit ci-dessus,
- une résine tackifiante.

L'invention concerne enfin l'utilisation du plastifiant tel que décrit ci-dessus dans des mastics ou adhésifs.

### DESCRIPTION DETAILLEE DE L'INVENTION

Le plastifiant selon l'invention comprend au moins une coupe hydrocarbonée ou une coupe issue de la conversion de la biomasse.

De préférence, le plastifiant selon l'invention comprend au moins une coupe hydrocarbonée.

On entend par coupe hydrocarbonée selon l'invention, une coupe issue de la distillation du pétrole brut, de préférence issue de la distillation atmosphérique et/ou distillation sous vide du pétrole brut, de préférence issue de la distillation atmosphérique suivie de la distillation sous vide.

La coupe hydrocarbonée selon l'invention est aussi de préférence soumise à des étapes d'hydrotraitement, hydrocraquage ou craquage catalytique.

La coupe hydrocarbonée selon l'invention est aussi de préférence soumise à des étapes de désaromatisation et éventuellement désulfuration.

La coupe hydrocarbonée selon l'invention peut aussi de préférence être soumise à une étape d'hydrodéparaffinage.

De préférence, la charge obtenue après la ou les étapes de distillation est une charge gazole, cette charge gazole étant soumise aux étapes d'hydrotraitement, hydrocraquage, craquage catalytique ou hydrodéparaffinage, suivi éventuellement des étapes de désaromatisation et éventuellement de désulfuration.

La coupe hydrocarbonée peut être un mélange de coupes hydrocarbonées subissant les étapes décrites ci-dessus.

La coupe hydrocarbonée telle que décrite ci-dessus, présente un intervalle de distillation ID (en °C) tel que 230≤ ID ≤ 400 et plus préférentiellement tel que 250 ≤ ID ≤ 380. La coupe hydrocarbonée peut comprendre une ou plusieurs fractions d'intervalles de distillation compris dans celui de ladite coupe.

La coupe hydrocarbonée selon l'invention comprend généralement plus de 60% en poids de composés paraffiniques, de préférence plus de 65%, encore plus préférentiellement plus de 70%.

La coupe hydrocarbonée selon l'invention est généralement constituée d'une majorité d'isoparaffines et d'une minorité de normales paraffines. De préférence la coupe hydrocarbonée contient plus de 50% en poids d'isoparaffines et moins de 20% en poids de normales paraffines.

La coupe hydrocarbonée selon l'invention comprend généralement moins de 50% en poids de composés naphténiques, de préférence moins de 40%, encore plus préférentiellement moins de 30%.

La coupe hydrocarbonée selon l'invention est de préférence exempte d'aromatiques. Par exempt, on entend, de préférence, une coupe hydrocarbonée comprenant moins de 300 ppm d'aromatiques, de préférence moins de 200 ppm, encore plus préférentiellement moins de 100 ppm mesurées par spectrométrie UV.

De préférence, la coupe hydrocarbonée selon l'invention, a une teneur en soufre inférieure à 10 ppm et préférentiellement inférieure à 2 ppm.

La coupe hydrocarbonée selon l'invention a généralement une viscosité cinématique à 40°C comprise entre 2 et 22 mm²/s, de préférence entre 2 et 15 mm²/s et de manière plus préférentielle entre 3 et 13 mm²/s selon la norme ASTM D445.

La coupe hydrocarbonée selon l'invention a un point d'écoulement selon la norme ASTM D97 compris entre -50 et +10 °C, de préférence compris entre -40 et 0 °C, encore plus préférentiellement compris entre -30 et -10°C.

La coupe issue de la conversion de la biomasse peut être produite à partir de matériaux biologiques bruts sélectionnés dans le groupe consistant en des huiles végétales, des graisses animales, des huiles de poisson et des mélanges de celles-ci. Les matériaux biologiques bruts appropriés comprennent les suivants : huile de graines de colza, huile de canola, huile de colza, huile de tall, huile de tournesol, huile de soja, huile de chanvre, huile d'olive, huile de lin, huile de moutarde, huile de palme, huile d'arachide, huile de ricin, huile de coco, graisses animales comme le lard, le suif ou la panne, graisses alimentaires recyclées, matières premières issues du génie génétique et matières premières biologiques produites par des microorganismes comme des algues et bactéries. Des produits de condensation, esters ou autres dérivés obtenus à partir de matériaux biologiques bruts peuvent également servir de matières premières.

Un solvant d'origine biologique est alors produit en utilisant par exemple un procédé qui comprend tout d'abord une étape d'hydrodésoxygénation (HDO) pour décomposer la structure des esters ou triglycérides biologiques constitutifs et pour éliminer les composés contenant de l'oxygène, du phosphore et du soufre tout en produisant en même temps l'hydrogénation des liaisons oléfiniques. Ceci est suivi par une isomérisation du produit ainsi obtenu conduisant à la ramification de la chaîne hydrocarbure et à une amélioration des propriétés de la paraffine à basses températures. Il est par exemple possible de fractionner le produit pour obtenir les coupes désirées.

La coupe hydrocarbonée selon l'invention a par ailleurs l'avantage d'être facilement disponible sur le marché, d'être relativement économique au sein de la chaîne des produits de la distillation pétrolière ou de la conversion de la biomasse.

Le plastifiant selon l'invention comprend également au moins un monoester d'acides gras. Il est entendu qu'il peut s'agir également d'un mélange de plusieurs acides gras, chacun des acides gras étant mono-estérifié.

Les esters d'acides gras sont obtenus par estérification des acides gras libres ou par transestérification des huiles animales et/ou végétales (ou triglycérides d'acides gras) avec un alcool. Lors de l'estérification ou de la transestérification, il peut subsister des petites quantités d'acides gras sous forme de monoglycéride, diglycéride, triglycéride ou d'acides gras sous forme libre.

Ainsi, même si le monoester d'acides gras selon l'invention est très majoritairement sous forme de monoester, il peut comprendre des quantités négligeables d'acides gras sous forme de monoglycéride, diglycéride, triglycéride ou sous forme libre.

Le monoester d'acides gras selon l'invention est sous forme de monoester à plus de 80% en masse, de préférence entre 90 et 100%, plus préférentiellement entre 95 et 98%. Les quantités d'acides gras sous forme de monoglycéride, diglycéride, triglycéride ou sous forme libre sont négligeables et ne représentent pas plus de 15% en masse du monoester d'acides gras selon l'invention, de préférence pas plus de 10%, plus préférentiellement pas plus de 6%, encore plus préférentiellement pas plus de 4%.

En particulier, le monoester d'acides gras selon l'invention ne comprend pas plus de 5% en masse d'acides gras sous forme de monoglycéride, de préférence pas plus de 1%. En particulier, le monoester d'acides gras selon l'invention ne comprend pas plus de 5% en masse d'acides gras sous forme de diglycéride, de préférence pas plus de 2%. En particulier, le monoester d'acides gras selon l'invention ne comprend pas plus de 5% en masse d'acides gras sous forme de triglycéride, de préférence pas plus de 1%. En particulier, le monoester d'acides gras selon l'invention ne comprend pas plus de 6% en masse d'acides gras sous forme libre, de préférence pas plus de 3%.

Les acides gras du monoester d'acides gras selon l'invention, sont des acides gras comprenant de 6 à 24 atomes de carbone, de préférence de 14 à 22 atomes de carbone, plus préférentiellement de 16 à 18 atomes de carbone, les acides gras comprenant 18 atomes de carbone, étant les acides gras majoritaires.

Selon un mode de réalisation, l'ester d'acide gras n'est pas choisi parmi les esters de glycérol et d'acide gras de tallöl.

Le monoester d'acide gras selon l'invention peut être un monoester d'alkyle en C₁-C₄, tels que un monoester de méthyle, un monoester d'éthyle, un monoester de *n*-propyle, un monoester de *i*-propyle, un monoester de *n-*butyle, un monoester de s-butyle, un monoester de t-butyle. De préférence, le monoester est un monoester de méthyle.

Le monoester d'acides gras préféré est un ester méthylique d'acide gras enregistré sous le numéro CAS 67762-26-9.

De préférence, le plastifiant selon l'invention comprend de 5 à 75 % en poids de monoester d'acides gras, plus préférentiellement de 10 à 60%, encore plus préférentiellement de 20 à 45%, encore plus préférentiellement de 30 à 40%.

Selon un mode de réalisation, le plastifiant comprend de 20 à 60 % en poids de monoester d'acides gras.

Selon un mode de réalisation, le plastifiant comprend de 45 à 75% d'une coupe hydrocarbonée ou d'une coupe issue de la conversion de la biomasse.

De préférence, la composition de plastifiant comprend de 25 % à 95% en poids de coupe hydrocarbonée ou de coupe issue de la conversion de la biomasse, plus préférentiellement de 40 à 90%, encore plus préférentiellement de 55 à 80%, encore plus préférentiellement de 60 à 70%.

De préférence, le rapport massique entre le monoester d'acide gras et la coupe hydrocarbonée ou la coupe issue de la conversion de la biomasse est compris entre 5:95 et 75:25, de préférence entre 10:90 et 60:40, plus préférentiellement entre 20:80 et 45:55, encore plus préférentiellement entre 30:70 et 40:60.

Le plastifiant selon l'invention est exempt de composés de type phtalate. Par exempt selon l'invention, on entend un plastifiant comprenant moins de 1% en masse de phtalates, par rapport à la masse de plastifiant, de préférence moins de 0,5%, plus préférentiellement moins de 0,1%, encore plus préférentiellement moins de 0,01%.

Le plastifiant selon l'invention a généralement une viscosité cinématique à 40°C allant de 5 à 22 mm²/s, de préférence allant de 5 à 15 mm²/s selon la norme ASTM D445.

L'invention concerne également une composition de mastic comprenant au moins un polymère choisi dans le groupe consistant en un polyéther comportant deux fonctions terminales de type silane, un polyuréthane comportant deux fonctions terminales de type silane, ou un mélange de ceux-ci, la composition de plastifiant telle que décrite ci-dessus et au moins un agent réticulant.

De préférence, le polymère est un polyéther comportant deux fonctions terminales de type silane.

Avantageusement la composition de mastic comprend de 10 à 50 % en poids dudit polymère, de préférence de 20 à 30 %.

Avantageusement la composition de mastic comprend de 10 à 30 % en poids de ladite composition de plastifiant, de préférence de 10 à 25 %.

De manière à satisfaire aux exigences mécaniques et physico-chimiques la composition de mastic comprend également de manière classique au moins un épaississant, une charge, un agent de réticulation et/ou un catalyseur.

L'invention a aussi pour objet une composition d'adhésif, de préférence une composition d'adhésif thermoplastique, comprenant au moins un polyamide, un copolymère d'éthylène acétate de vinyle, la composition de plastifiant selon telle que décrite ci-dessus et une résine tackifiante.

Les compositions de mastics et d'adhésifs selon l'invention ont la caractéristique remarquable de contenir moins de 0,1% en poids de phtalates, par rapport à la masse de la composition, de préférence moins de 0,05%, plus préférentiellement moins de 0,01%, encore plus préférentiellement moins de 0,001%.

Les compositions de mastics et d'adhésifs thermoplastique telles que décrites sont sans phtalates et à bas taux de COV afin de satisfaire aux exigences réglementaires en vigueur.

Il est décrit l'utilisation de la composition plastifiante selon l'invention dans des mastics et des adhésifs.

### EXEMPLES

Dans la suite de la présente description, des exemples sont donnés à titre illustratif de la présente invention et ne visent en aucun cas à en limiter la portée.

Différentes formulations de mastic hybride à base de polymères siliconés modifiés (en anglais Silyl Modified Polymer ou SMP) ont été évaluées. Ces mastics SMP incluent les familles de produits ST-PE (Silane terminated Polyether) et ST-PU (Silane terminated Poyurethane).

Les exemples suivants décrivent les compositions de mastics SMP comprenant les différents plastifiants ci-dessous:
- une coupe hydrocarbonée hydrocraquée telle que l'HYDROSEAL G3H ou l'HYDROSEAL G400H commercialisées par la société TOTAL FLUIDES, exemple comparatif 1,
- une coupe hydrocarbonée hydrodéparaffinée telle que l'HYDROSEAL G340H commercialisée par la société TOTAL FLUIDES, exemple comparatif 2,
- du di-isodécyl phthalate (ou DIDP) comme référence pour les phtalates, exemple comparatif 3,
- un mélange d'esters méthyliques d'acides gras ou EMAG (en anglais FAME ou fatty acid methyl ester) + HYDROSEAL G3H ou HYDROSEAL G340H ou HYDROSEAL G400H, exemples selon l'invention 4, 5, 6 et 7 dans différentes proportions.

Le tableau 1 regroupe les caractéristiques chimiques du mastic ST-PE utilisé pour les différentes évaluations.

**Tableau 1 Formulation**

| | % masse | Nature Chimique / Propriétés |
|---|---|---|
| Polymère MS 203H | 15 | ST-PE / Polymère |
| Polymère MS 303H | 10 | ST-PE / Polymère |
| Plastifiant | 17 | Cf. mélanges décrits au tableau 2 ci-dessous |
| Crayvallac SLX | 4,5 | PA-wax / épaississant |
| Carbital 110S | 51,1 | Chalk / charge |

| Activation SLX ; T>70°C | | |
|---|---|---|
| Refroidissement à T<40°C | | |
| Dynasilan VTMO | 0,8 | Vinyltrimethoxysilan/ agent séchant |

| Séchage des additifs pendant 1heure | | |
|---|---|---|
| DynasilanAMMO | 1,1 | 3-Aminopropylmethoxysilane / agent de réticulation |

| Refroidissement à T<30°C, Réticulation pendant 30 min | | |
|---|---|---|
| TIB Kat 223 | 0,3 | Dioctyltindiethanolate/Catalyseur |
| CatalystTIB Kat 422 | 0,2 | Dioctyltin- silane -blend / Catalyseur |

Le tableau 2 regroupe les résultats obtenus pour les différentes formulations de mastics.

**Tableau 2**

| Exemple | Plastifiant | Rapport constituants du plastifiant | Durcissement⁽¹⁾ | Ressuage ⁽²⁾ | Aspect Surface ⁽³⁾ |
|---|---|---|---|---|---|
| 1 comparatif | 17% HYDROSEAL G3H | - | ok | oui (3j) | Sèche |
| 2 comparatif | 17% HYDROSEAL G340H | - | ok | oui, fort après 1 jour (1j) | mouillée |
| 3 comparatif | 17% DIDP | - | ok | non | sèche |
| 4 | 8,5% EMAG / 8,5% HYDROSEAL G340H | 50/50 | ok | non | Sèche |
| 5 | 8% EMAG / 9% HYDROSEAL G340H | 47/53 | ok | non | sèche |
| 6 | 5% EMAG / 12% HYDROSEAL G3H | 29/71 | ok | non | sèche |
| 7 | 7% EMAG / 10% HYDROSEAL G400H | 41/59 | ok | non | sèche |

| | | | | | |
|---|---|---|---|---|---|
| ⁽¹⁾ Le durcissement du mastic est évalué au toucher 24 heures après son application, ⁽²⁾ Pour évaluer le ressuage, l'application du mastic est faite sur une fiche Bristol de type Exacompta 13308E. Après durcissement, la fiche est vérifiée de manière périodique afin de voir si l'huile migre vers la fiche Bristol. ⁽³⁾ L'évaluation de l'humidité de la surface du mastic se fait visuellement. | | | | | |

Les résultats du tableau 2 montrent que les propriétés de la composition de mastic sont toutes aussi bonnes voire meilleures avec un plastifiant comprenant un fluide hydrocarboné en mélange avec un monoester d'acide gras. Le durcissement du mastic est satisfaisant, aucune humidité ni aucun ressuage n'est constaté.

Le tableau 3 regroupe les résultats obtenus pour d'autres formulations de mastics avec comme plastifiant la référence phtalates (exemple comparatif 1bis) et un plastifiant selon l'invention (exemple 8 selon l'invention).

La formulation de l'exemple 1bis contient 17% d'un plastifiant qui est le Jayflex DIDP. La formulation de l'exemple 8 contient 17% d'un plastifiant qui est un mélange d'Hydroseal G340H et d'esters méthyliques d'acides gras (EMAG). Les pourcentages en masse d'Hydroseal G340H et des esters méthyliques d'acides gras (EMAG) sont respectivement de 8% et 9% par rapport à la masse de la formulation.

**Tableau 3**

| | | Exemple Ibis | Exemple 8 |
|---|---|---|---|
| | Nature chimique / Propriétés | DIDP composition (en % massique) | EMAG/Hydroseal G340H composition (en % massique) |
| Polymer MS 203H | Polyéther à fonctions terminales de type silane / Polymère | 15 | 15 |
| Polymer MS 303H | Polyéther à fonctions terminales de type silane / Polymère | 10 | 10 |
| Irganox 1076 | anti-oxydant phénolique à empêchement stérique | 0,2 | 0,2 |
| Jayflex DIDP | Di-isodecyl phthalate / Plastifiant | 17 | - |
| Hydroseal G340H | Hydroseal / Plastifiant | - | 8 |
| EMAG | Ester méthylique d'acide gras / Plastifiant | - | 9 |
| Crayvallac SLX | PA-wax / épaississant | 5,5 | 5,5 |
| Carbital 110S | Chalk / charge | 49,9 | 49,9 |
| Dynasilan VTMO | Vinyltrimethoxysilan/ agent séchant | 0,8 | 0,8 |
| Dynasilan AMMO | 3-Aminopropylmethoxysilane / agent de réticulation | 1,1 | 1,1 |
| Tegokat 223 | Dioctyltindiethanolate / Catalyseur | 0,3 | 0,3 |
| Tegokat 422 | Dioctyltin-silane-blend / | 0,2 | 0,2 |
| | Catalyseur | | |
| | TOTAL | 100 | 100 |

**Tableau 4 : Propriétés mécaniques**

| | Exemple Ibis | Exemple 8 |
|---|---|---|
| Caractéristiques | DIDP | EMAG/G340H |
| Viscosité après 0 jour / 56 jours (en Pa.s) (Méthode interne) | 6150 / 4800 | 4650 / 3450 |
| Temps de formation de la peau (temps de lissage) après 0 jour / 56 jours (en min) (Méthode interne) | 8 / 10 | 13 / 14 |
| Dureté Shore A après 28 jours à température ambiante (DIN ISO 7619) | 28 | 28 |
| Résistance au cisaillement (application du mastic sur un substrat en bois) EN 281 après 3 jours (en N/mm²) (DIN EN 14293) | 0,795 | 0,717 |
| Résistance au cisaillement (application du mastic sur un substrat en bois) EN 281 après 3 jours (en mm) (DIN EN 14293) | 2,0 | 0,9 |
| Module d'élasticité à 100% (film de 2mm) 3 jours / 28 jours (en N/mm²) (DIN 53504, S2) | 0,44 / 0,46 | 0,33 / 0,40 |
| Résistance à la traction (film de 2 mm) 3 jours / 28 jours (en N/mm²) (DIN 53504, S2) | 1,13 / 1,16 | 0,92 / 1,10 |
| Allongement à la rupture à 3 jours / 28 jours (en %) (DIN 53504, S2) | 1150 / 1150 | 1050 / 1000 |
| Module d'élasticité à 1 00% (béton cycle A) à température ambiante (en N/mm²) (DIN 52455-1) | 0,536 | 0,527 |
| Module d'élasticité à 100% (aluminium cycle A) à température ambiante (en N/mm²) (DIN 52455-1) | 0,518 | 0,494 |
| Module d'élasticité à 1 00% (Béton cycle B) à température ambiante (en N/mm²) (DIN 52455-1) | 0,461 | 0,461 |
| Module d'élasticité à 100% (Béton cycle B) à -20°C (en N/mm²) (DIN 52455-1) | 0,513 | 0,728 |
| Module d'élasticité à 100% (Aluminium cycle B) à température ambiante (en N/mm²) (DIN 52455-1) | 0,511 | 0,474 |
| Reprise élastique à température ambiante (en %) (DIN EN ISO 7389-B) | 64 | 78 |

On remarque que les propriétés mécaniques du mastic ST-PE contenant la composition EMAG/Hydroseal G340H en tant que plastifiant sont aussi bonnes voire meilleures que celles d'un mastic contenant du DIDP en tant que plastifiant.

## Revendications

1. Composition comprenant :
a) au moins un polymère choisi dans le groupe consistant en un polyéther comportant deux fonctions terminales de type silane, un polyuréthane comportant deux fonctions terminales de type silane, un polyamide, ou un mélange de ceux-ci ;
b) un plastifiant ;
c) au moins un composé choisi dans le groupe consistant en un épaississant, une charge, un agent de réticulation, un catalyseur de réticulation et une résine tackifiante, ou un mélange de ceux-ci, ledit plastifiant comprenant :
i) au moins une coupe hydrocarbonée ou une coupe issue de la conversion de la biomasse, ladite coupe pouvant être produite à partir de matériaux biologiques bruts sélectionnés dans le groupe consistant en des huiles végétales, des graisses animales, des huiles de poisson et des mélanges de celles-ci, les matériaux biologiques bruts subissant une étape d'hydrodésoxygénation (HDO) pour décomposer la structure des esters ou triglycérides biologiques constitutifs et pour éliminer les composés contenant de l'oxygène, du phosphore et du soufre tout en produisant en même temps l'hydrogénation des liaisons oléfiniques, suivi par une isomérisation du produit ainsi obtenu conduisant à la ramification de la chaîne hydrocarbure ;
ii) au moins un monoester d'acides gras, les acides gras du monoester d'acides gras comprenant de 6 à 24 atomes de carbone ;
iii) moins de 1% en poids de phtalates.

2. Composition selon la revendication 1, dans laquelle le plastifiant comprend au moins une coupe hydrocarbonée.

3. Composition selon la revendication 1 ou 2, dans laquelle la coupe hydrocarbonée est une coupe hydrocarbonée hydrotraitée, hydrocraquée ou craquée catalytiquement.

4. Composition selon l'une des revendications 1 à 3, dans laquelle la coupe hydrocarbonée est une coupe hydrocarbonée désaromatisée et/ou désulfurée.

5. Composition selon l'une des revendications 1 à 4, dans laquelle la coupe hydrocarbonée présente une température d'ébullition comprise entre 230 et 400 °C.

6. Composition selon l'une des revendications 1 à 5, dans laquelle la coupe hydrocarbonée présente une viscosité cinématique à 40°C comprise entre 2 et 22 mm²/s selon la norme ASTM D445.

7. Composition selon l'une des revendications 1 à 6, dans laquelle la coupe hydrocarbonée présente un point d'écoulement allant de -50 à + 10 °C selon la norme ASTM D97.

8. Composition selon l'une des revendications 1 à 7, dans laquelle la coupe hydrocarbonée présente une teneur en composés aromatiques mesurée par UV inférieure à 300 ppm, de préférence inférieure à 200 ppm et encore plus préférentiellement inférieure à 100 ppm.

9. Composition selon l'une des revendications 1 à 8, dans laquelle le monoester d'acide gras est un ester méthylique d'acides gras en C14-18.

10. Composition selon l'une des revendications 1 à 9, dans laquelle le rapport massique entre le monoester d'acide gras et la coupe hydrocarbonée ou la coupe issue de la conversion de la biomasse est compris entre 5:95 et 75:25, de préférence entre 10:90 et 60:40, plus préférentiellement entre 20:80 et 45:55, encore plus préférentiellement entre 30:70 et 40:60.

11. Composition selon l'une des revendications 1 à 10, qui est une composition de mastic comprenant :
- au moins un polymère choisi dans le groupe consistant en un polyéther comportant deux fonctions terminales de type silane, un polyuréthane comportant deux fonctions terminales de type silane, ou un mélange de ceux-ci ;
- et au moins un agent réticulant.

12. Composition selon l'une des revendications 1 à 10, qui est une composition d'adhésif comprenant :
- au moins un polyamide ;
- un copolymère d'éthylène acétate de vinyle ;
- une résine tackifiante.

## Patentansprüche

1. Zusammensetzung bestehend aus:
a) mindestens ein Polymer ausgewählt aus der Gruppe bestehend aus einem Polyether mit zwei endständigen Funktionen vom Silantyp, einem Polyurethan mit zwei endständigen Funktionen vom Silantyp, einem Polyamid oder einer Mischung davon;
b) einen Weichmacher;
c) mindestens eine Verbindung ausgewählt aus der Gruppe bestehend aus einem Verdickungsmittel, einem Füllstoff, einem Vernetzungsmittel, einem Vernetzungskatalysator und einem klebrigmachenden Harz oder einer Mischung davon, wobei der Weichmacher umfasst:
i) mindestens ein Kohlenwasserstoffschnitt oder ein Schnitt, der aus der Umwandlung von Biomasse resultiert, wobei der Schnitt aus biologischen Rohmaterialien ausgewählt aus der Gruppe bestehend aus Pflanzenölen, tierischen Fetten, Fischölen und Mischungen davon hergestellt werden kann, wobei die rohen biologischen Materialien, die einem Hydrodesoxygenierungsschritt (HDO) unterzogen werden, um die Struktur der konstituierenden biologischen Ester oder Triglyceride zu zersetzen und sauerstoff-, phosphor- und schwefelhaltige Verbindungen zu entfernen, während gleichzeitig eine Hydrierung von olefinischen Bindungen erzeugt wird, gefolgt von einer Isomerisierung des so erhaltenen Produkts führt zu einer Verzweigung der Kohlenwasserstoffkette,
ii) mindestens einen Fettsäuremonoester, wobei die Fettsäuren des Fettsäuremonoesters 6 bis 24 Kohlenstoffatome umfassen;
iii) weniger als 1 Gew.-% Phthalate.

2. Zusammensetzung nach Anspruch 1, wobei der Weichmacher mindestens einen Kohlenwasserstoffschnitt umfasst.

3. Zusammensetzung nach Anspruch 1 oder 2, wobei der Kohlenwasserstoffschnitt ein hydrobehandelter, hydrogecrackter oder katalytisch gecrackter Kohlenwasserstoffschnitt ist.

4. Zusammensetzung nach einem der Ansprüche 1 bis 3, bei der der Kohlenwasserstoffschnitt ein entaromatisierter und/oder entschwefelter Kohlenwasserstoffschnitt ist.

5. Zusammensetzung nach einem der Ansprüche I bis 4, bei der der Kohlenwasserstoffschnitt einen Siedepunkt zwischen 230 und 400°C aufweist.

6. Zusammensetzung nach einem der Ansprüche 1 bis 5, bei der der Kohlenwasserstoffschnitt eine kinematische Viskosität bei 40 °C zwischen 2 und 22 mm2/s gemäß der Norm ASTM D445 aufweist.

7. Zusammensetzung nach einem der Ansprüche 1 bis 6, in der Kohlenwasserstoffschnitt hat einen Pourpoint im Bereich von -50 bis +10 °C gemäß der Norm ASTM D97.

8. Zusammensetzung nach einem der Ansprüche 1 bis 7, wobei der Kohlenwasserstoffschnitt einen Gehalt an aromatischen Verbindungen, gemessen durch UV, von weniger als 300 ppm, vorzugsweise weniger als 200 ppm und noch bevorzugter weniger als 100 ppm aufweist.

9. Zusammensetzung nach einem der Ansprüche 1 bis 8, wobei der Fettsäuremonoester ein Methylester von C 14-18 Fettsäuren ist.

10. Zusammensetzung nach einem der Ansprüche 1 bis 9, bei der das Massenverhältnis zwischen dem Fettsäuremonoester und dem Kohlenwasserstoffschnitt oder dem aus der Umwandlung von Biomasse resultierenden Schnitt zwischen 5:95 und 75:25, vorzugsweise zwischen 10:90. liegt und 60:40, stärker bevorzugt zwischen 20:80 und 45:55, noch stärker bevorzugt zwischen 30:70 und 40:60.

11. Zusammensetzung nach einem der Ansprüche 1 bis 10, die eine Mastixzusammensetzung ist, umfassend:
- mindestens ein Polymer ausgewählt aus der Gruppe bestehend aus einem Polyether mit zwei endständigen Funktionen vom Silantyp, einem Polyurethan mit zwei endständigen Funktionen vom Silantyp oder einer Mischung davon;
- und mindestens ein Vernetzungsmittel.

12. Zusammensetzung nach einem der Ansprüche 1 bis 10, die a Klebstoffzusammensetzung, umfassend:
- mindestens ein Polyamid;
- ein Ethylen-Vinylacetat-Copolymer;
- ein klebrigmachendes Harz.

## Claims

1. Composition comprising:
a) at least one polymer chosen from the group consisting of a polyether comprising two terminal functions of silane type, a polyurethane comprising two terminal functions of silane type, a polyamide, or a mixture thereof;
b) a plasticizer;
c) at least one compound selected from the group consisting of a thickener, a filler, a crosslinking agent, a crosslinking catalyst and a tackifying resin, or a mixture thereof, said plasticizer comprising:
i) at least one hydrocarbon cut or a cut resulting from the conversion of biomass, said cut being able to be produced from raw biological materials selected from the group consisting of vegetable oils, animal fats, fish oils and mixtures thereof, the raw biological materials undergoing a hydrodeoxygenation (HDO) step to decompose the structure of the constituent biological esters or triglycerides and to remove the compounds containing oxygen, phosphorus and sulfur while at the same time producing the hydrogenation olefinic bonds, followed by isomerization of the product thus obtained leading to branching of the hydrocarbon chain,
ii) at least one fatty acid monoester, the fatty acids of the fatty acid monoester comprising from 6 to 24 carbon atoms;
iii) less than 1% by weight of phthalates.

2. Composition according to Claim 1, in which the plasticizer comprises at least one hydrocarbon cut.

3. Composition according to claim 1 or 2, in which the hydrocarbon cut is a hydrotreated, hydrocracked or catalytically cracked hydrocarbon cut.

4. Composition according to one of claims 1 to 3, in which the hydrocarbon cut is a dearomatized and / or desulphurized hydrocarbon cut.

5. Composition according to one of claims 1 to 4, in which the hydrocarbon cut has a boiling point of between 230 and 400° C.

6. Composition according to one of Claims 1 to 5, in which the hydrocarbon cut has a kinematic viscosity at 40° C of between 2 and 22 mm²/s according to standard ASTM D445.

7. Composition according to one of Claims 1 to 6, in which the hydrocarbon cut has a pour point ranging from -50 to +10°C according to the ASTM D97 standard.

8. Composition according to one of Claims 1 to 7, in which the hydrocarbon cut has a content of aromatic compounds measured by UV of less than 300 ppm, preferably less than 200 ppm and even more preferably less than 100 ppm.

9. Composition according to one of claims 1 to 8, wherein the fatty acid monoester is a methyl ester of C 14-18 fatty acids.

10. Composition according to one of claims 1 to 9, in which the mass ratio between the fatty acid monoester and the hydrocarbon cut or the cut resulting from the conversion of biomass is between 5:95 and 75:25, preferably between 10:90 and 60:40, more preferably between 20:80 and 45:55, even more preferably between 30:70 and 40:60.

11. Composition according to one of claims 1 to 10, which is a mastic composition comprising:
- at least one polymer chosen from the group consisting of a polyether comprising two terminal functions of silane type, a polyurethane comprising two terminal functions of silane type, or a mixture of these;
- and at least one crosslinking agent.

12. Composition according to one of claims 1 to 10, which is an adhesive composition comprising:
- at least one polyamide;
- an ethylene vinyl acetate copolymer;
- a tackifying resin.
